# EUROPEAN PATENT APPLICATION

(11) **EP 3 663 189 A1**
(43) Date of publication of application: **10.06.2020**
(21) Application number: 18842282.8
(22) Date of filing: 27.07.2018
(51) Int. Cl.: B64C 1/06, B64C 27/08

(54) **UNMANNED AERIAL VEHICLE**

(30) Priority: 01.08.2017 CN 201720954650 U
(71) Applicant: Guangzhou Xaircraft Technology Co., Ltd., Tianhe District Guangzhou Guangdong 510000 (CN)
(72) Inventor: XIAO, Dingfeng, Guangzhou, Guangdong 510000 (CN); XU, Zhiqin, Guangzhou, Guangdong 510000 (CN)
(74) Representative: Leihkauf, Steffen Falk
(86) International application number: PCT/CN2018/097543
(87) International publication number: WO 2019/024806

(57) **Abstract**

Some embodiments of the present disclosure provide an unmanned aerial vehicle, the unmanned aerial vehicle includes a fuselage (1), a shell assembly (3) and a functional assembly. The fuselage includes a fuselage body (10). The shell assembly (3) is connected to a front end of the fuselage body. The functional assembly is mounted at a rear end of the fuselage body. An upper end face of the functional assembly is a first circular arc face. An upper end face of the shell assembly (3) is a second circular arc face. The first circular arc face is adjacent to the second circular arc face, and the first circular arc face and the second circular arc face constitute a streamlined curved face. Such a design can solve the problems of existing unmanned aerial vehicles having low working efficiency and consuming a large amount of energy caused by an irrational layout of the unmanned aerial vehicles.

## Description

### Technical Field

The present disclosure belongs to a technical field of unmanned aerial vehicles, and more particularly to an unmanned aerial vehicle.

### Background

An unmanned aerial vehicle is an unmanned aerial vehicle that is controlled by a wireless remote control device and its own control device. In recent years, due to an improvement of a level of automation technology, unmanned aerial vehicles have been widely used in plant protection operations. For example, unmanned aerial vehicles are used for pesticide spraying, farming management and the like of plants. When an unmanned aerial vehicle sprays pesticide to plants, a liquid storage container is generally provided on a fuselage of the unmanned aerial vehicle, and the liquid storage container is used to hold the pesticide to be sprayed.

The unmanned aerial vehicle used in plant protection operations generally includes a fuselage, and functional assemblies mounted on the fuselage, such as a liquid storage container and a battery. In information disclosed in a related art, unmanned aerial vehicles have low working efficiency and consume a large amount of energy caused by an irrational layout of fuselage structure of the unmanned aerial vehicles.

### Summary

Some embodiments of the present disclosure provide an unmanned aerial vehicle, intended to solve problems of existing unmanned aerial vehicles having low working efficiency and consuming a large amount of energy caused by an irrational layout of the unmanned aerial vehicles.

In embodiments of the present disclosure, the above problem is solved as follows. In an unmanned aerial vehicle, a fuselage includes a fuselage body. A shell assembly is coupled to a front end of the fuselage body. A functional assembly is mounted at a rear end of the fuselage body. An upper end face of the functional assembly is a first circular arc face. An upper end face of the shell assembly is a second circular arc face. The first circular arc face is adjacent to the second circular arc face. The first circular arc face and the second circular arc face define a streamlined curved face.

In an exemplary embodiment, the functional assembly includes a liquid storage container. The liquid storage container is mounted at the rear end of the fuselage body. A top of the liquid storage container has a third circular arc face. The third circular arc face is adjacent to the second circular arc face. At least part of the first circular arc face is the third circular arc face.

In an exemplary embodiment, the functional assembly further includes a battery member. The liquid storage container is located between the battery member and the shell assembly. A top of the battery member has a fourth circular arc face. The third circular arc face is located between the fourth circular arc face and the second circular arc face. At least part of the first circular arc face is the fourth circular arc face.

In an exemplary embodiment, the shell assembly includes a mounting shell coupled to the front end of the fuselage body in a limited manner and a base shell coupled above the mounting shell. An upper end face of the base shell is the second circular arc face.

In an exemplary embodiment, the base shell includes a base shell body coupled to a connecting beam and a top cover coupled to the base shell body. The base shell body includes a front shell and an upper shell extending upward and backward along the front shell. The top cover covers the upper shell. An upper end face of the top cover and an upper end face of the upper shell form the second circular arc face.

In an exemplary embodiment, the upper shell is provided with a mounting hole for positioning and connecting the top cover. A fitting groove for abutting against an inner wall of the top cover is formed on a circumference of the mounting hole. The top cover is magnetically attracted and coupled to the interior of the fitting groove.

In an exemplary embodiment, the front shell extends backward along both sides of the front shell and forms a ventilating duct that facilitates heat dissipation of the fuselage body.

In an exemplary embodiment, the liquid storage container includes a container body with a liquid storage chamber. The container body includes a lower case and an upper case coupled to an upper portion of the lower case. The upper case is communicated with the lower case. A top of the upper case is the third circular arc face. The battery member is adjacent to an end, away from the shell assembly, of the upper case.

In an exemplary embodiment, the fuselage further includes a mounting frame. The mounting frame includes a fixing bracket coupled to the rear end of the fuselage body and a mounting bracket coupled to the fixing bracket. The fuselage further includes a first mounting through groove disposed in the fixing bracket and used for limiting connection of the lower case and a second mounting through groove disposed in the mounting bracket and used for limiting connection of the battery member.

In an exemplary embodiment, the unmanned aerial vehicle includes a plurality of arms, a power assembly provided on the fuselage body and extended outward from the fuselage body, a power assembly provided on an extending end of each of the plurality of arms and a landing gear for buffering during landing, and the landing gear is provided on a bottom of the fuselage body.

The unmanned aerial vehicle provided by the present disclosure has the technical effects with respect to the existing technology is that a shell assembly is arranged at a front end of a fuselage while a functional assembly is arranged at a rear end of the fuselage; and an upper end face on the shell assembly is a second circular arc face, an upper end face of the functional assembly is a first circular arc face, the first circular arc face is adjacent to the second circular arc face, and the first circular arc face and the second circular arc face constitute a streamlined curved face, so that the air resistance when the unmanned aerial vehicle is working is reduced, thereby reducing energy consumption.

### Brief Description of the Drawings

In order to more clearly illustrate the technical solutions in the embodiments of the present disclosure, the drawings used in the description of the embodiments or the conventional art will be briefly described below. It is apparent that the drawings in the following description are only some embodiments of the present disclosure, and other drawings can be obtained from those skilled in the art according to these drawings without any creative work.
Fig. 1 illustrates a schematic stereogram of an unmanned aerial vehicle according to an embodiment of the present disclosure.
Fig. 2 illustrates a schematic stereogram of the unmanned aerial vehicle in Fig. 1 with a battery removed.
Fig. 3 illustrates a schematic stereogram of a partial structure of the unmanned aerial vehicle in Fig. 1.
Fig. 4 illustrates a schematic stereogram of a shell assembly of the unmanned aerial vehicle in Fig. 1.
Fig. 5 illustrates a schematic stereogram of the shell assembly in Fig. 4.
Fig. 6 illustrates a schematic stereogram of a liquid storage container of the unmanned aerial vehicle in Fig. 1.
Fig. 7 illustrates a side view of the unmanned aerial vehicle in Fig. 1.
   1, fuselage; 10, fuselage body; 11, transfer bin; 12, top plate; 13, bottom plate; 14, mounting frame; 141, fixing bracket; 142, mounting bracket; 143, division plate; 144, first mounting through groove; 145, second mounting through groove;
   2, arm; 3, shell assembly; 31, mounting shell; 32, base shell; 321, base shell body; 322, top cover; 3211, front shell; 3212, upper shell; 3213, mounting hole; 3214, fitting groove; 3215, magnetic ring; 3210, ventilating duct;
   4, landing gear; 5, power assembly; 6, liquid storage container; 61, upper case; 62, lower case; 611, bottom wall; 612, side wall; 613, top wall; 614, front end wall; 615, rear end wall; 616, liquid inlet; 621, liquid outlet;
   7, battery member.

### Detailed Description of the Embodiments

In order to make the purposes, technical solutions and advantages of the present disclosure clearer, the present disclosure will be further described in detail below with reference to the accompanying drawings and embodiments. It is to be understood that the specific embodiments described herein are merely illustrative of the present disclosure and are not intended to limit the present disclosure.

It is to be noted that when an element is referred to as being "fixed" or "in" another element, it may be on the other element directly or indirectly. When an element is referred to as being "coupled" to another element, it may be coupled to the other element directly or indirectly.

It is to be understood that an orientation or positional relationship indicated by the terms "length", "width", "up", "down", "front", "back", "left", "right", "vertical", "horizontal", "top", "bottom", "inside", "outside" and the like is an orientation or positional relationship shown in the drawings, and is merely for the convenience of describing the present disclosure and simplifying the description, rather than indicating or implying that the device or elements referred to have a particular orientation, and configure and operate for the particular orientation. Thus, it cannot be construed as limiting the present disclosure.

In addition, terms "first" and "second" are only adopted for description and should not be understood to indicate or imply relative importance or implicitly indicate the number of indicated technical features. Therefore, a feature defined by "first" and "second" explicitly or implicitly indicates inclusion of one or more of such features. In the descriptions of the present disclosure, "a plurality of" means two or more, unless otherwise limited definitely and specifically.

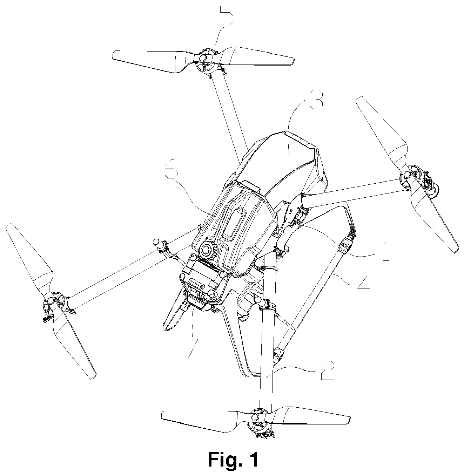

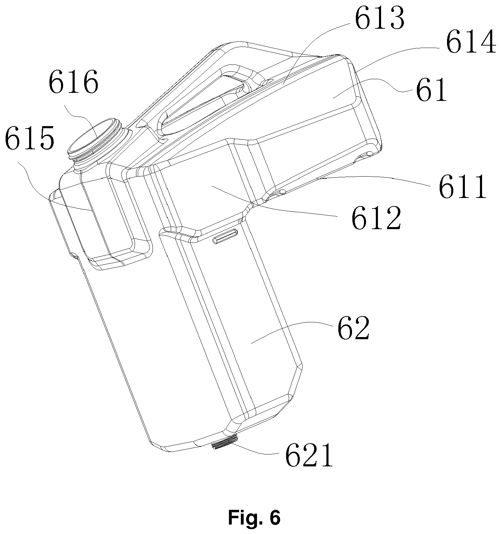

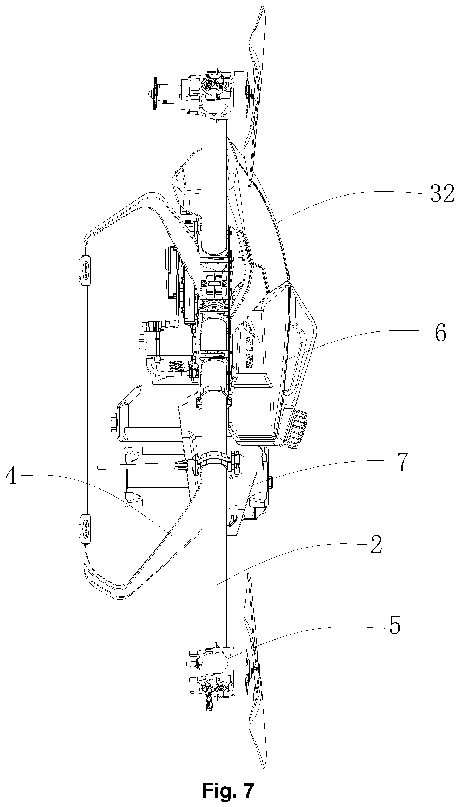

As shown in Fig. 1 to Fig. 7, in some embodiments of the present disclosure, an unmanned aerial vehicle is provided, which includes a fuselage 1, and a shell assembly 3 and a functional assembly coupled to the fuselage 1. The shell assembly 3 covers the fuselage 1. The fuselage 1 includes a fuselage body 10 and a mounting frame 14 coupled to the fuselage body 10. The functional assembly is coupled to the mounting frame 14, and the functional assembly includes a liquid storage container 6 and a battery member 7. The liquid storage container 6 is used to store liquid to be sprayed. The shell assembly 3 includes a mounting shell 31 coupled to the fuselage body 10 in a limited manner and a base shell 32 coupled above the mounting shell 31. The mounting shell 31 and the base shell 32 are coupled in an up-down relationship. The liquid storage container 6 and the shell assembly 3 are coupled to the fuselage body 10 in a front-rear (or left-right) relationship. An upper end face of the liquid storage container 6 and/or the battery member 7 is a first circular arc face. An upper end face of the base shell 32 is a second circular arc face. The first circular arc face is adjacent to the second circular arc face. That is, one end of the first circular arc face is attached and coupled to one end of the second circular arc face. The first circular arc face and the second circular arc face define a streamlined curved face. Herein, in an exemplary embodiment the first circular arc face and the second circular arc face are adjacent to form a complete arc face.

In the unmanned aerial vehicle designed above, the mounting frame 14 is arranged on the fuselage 1, and the liquid storage container 6 may be detachably coupled to an interior of the mounting frame 14, thereby realizing rapid mounting and dismounting of the liquid storage container 6 on a main body of the fuselage 1. Moreover, the upper end face of the base shell 32 on the shell assembly 3 is the second circular arc face, an upper end face of the liquid storage container 6 is the first circular arc face, the first circular arc face is adjacent to the second circular arc face, and the first circular arc face and the second circular arc face define a streamlined curved face, so that the air resistance when the unmanned aerial vehicle is working is reduced, thereby reducing energy consumption.

In an exemplary embodiment, the functional assembly is a component or a combination of several components that provide resources for the unmanned aerial vehicle to implement various functions. Generally, its volume is relatively large in the elements of the unmanned aerial vehicle. Furthermore, the upper end face of the functional assembly is the streamlined curved face, which can reduce the large flight resistance of the unmanned aerial vehicle. For example, in a plant protection unmanned aerial vehicle, it may be a liquid storage container 6 or a battery member 7, or both.

In an exemplary embodiment, in the embodiment of the present disclosure, the functional assembly includes a liquid storage container 6. The liquid storage container 6 is mounted at a rear end of the fuselage body 10. A top of the liquid storage container 6 has a third circular arc face. The third circular arc face is adjacent to the second circular arc face, and at least part of the first circular arc face is the third circular arc face.

Of course, in an exemplary embodiment, the functional assembly further includes a battery member 7. The battery member 7 is adjacent to an end of the liquid storage container 6 away from the shell assembly 3. The top of the battery member 7 has a fourth circular arc face. The fourth circular arc face is adjacent to an end, of the third circular arc face, away from the second circular arc face, and similarly, at least part of the first circular arc face is the fourth circular arc face.

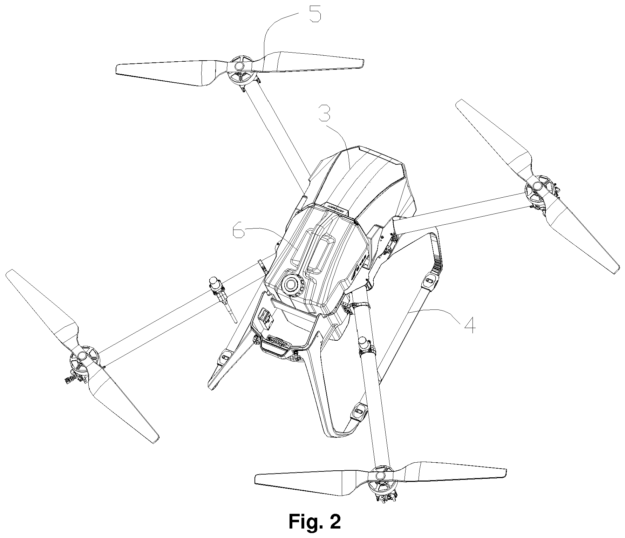

In an exemplary embodiment, as shown in Fig. 2 to Fig. 5, in the embodiment of the present disclosure, the mounting shell 31 is fixedly coupled to the fuselage body 10, and the mounting shell 31 includes a plurality of connecting shells (not shown) coupled to the fuselage body 10 and a connecting beam coupled between the plurality of connecting shells and used to support the base shell 32. In an exemplary embodiment, the number of the connecting shells is two. The connecting beam is coupled between the two connecting shells. The base shell 32 includes a base shell body 321 coupled to the connecting beam and a top cover 322 coupled to the base shell body 321.

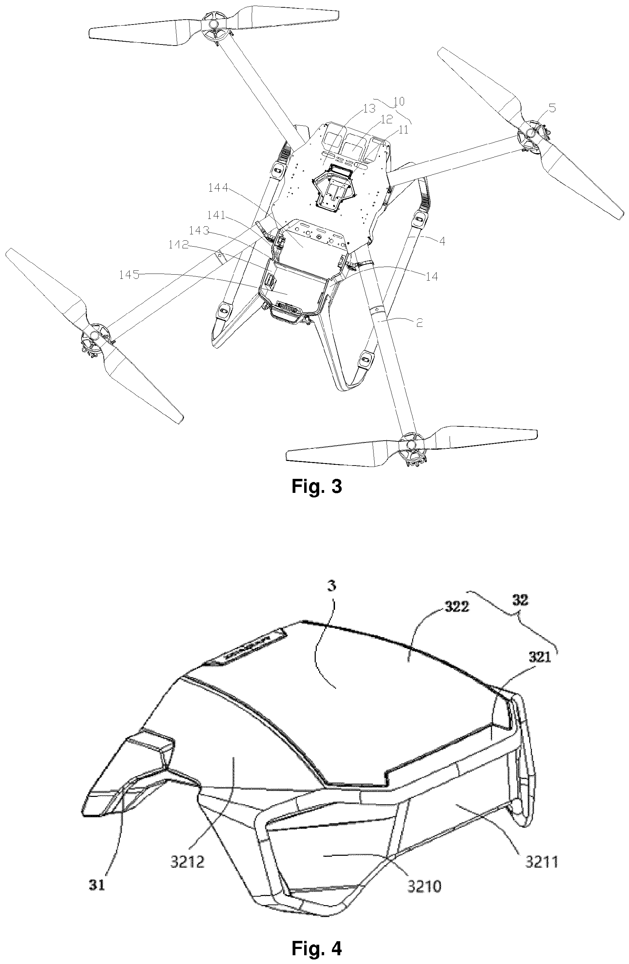

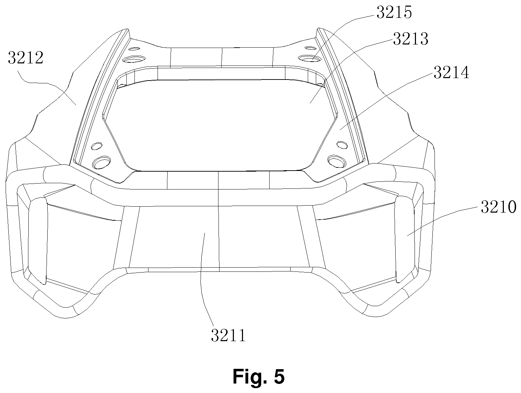

In an exemplary embodiment, as shown in Fig. 4 and Fig. 5, in the embodiment of the present disclosure, the base shell body 321 includes a front shell 3211 and an upper shell 3212 extending upward and backward along the front shell 3211. That is, the front shell 3211 and the upper shell 3212 are integrated, and the upper shell 3212 is located at an upper portion of the front shell 3211. The top cover 322 covers the upper shell 3212, and an upper end face of the top cover 322 and an upper end face of the upper shell 3212 form the second circular arc face.

In the embodiment of the present disclosure, the upper shell 3212 is provided with a mounting hole 3213 for positioning and connecting the top cover 322. A bottom face of the top cover 322 is extended downward with a positioning shaft (not shown) for positioning and connecting to the mounting hole 3213. A fitting groove 3214 for abutting against an inner wall of the top cover 322 is formed on a circumference of the mounting hole 3213, and the top cover 322 is magnetically attracted and coupled to an interior of the fitting groove 3214.

In an exemplary embodiment, a magnetic ring 3215 is arranged in the fitting groove 3214 in advance. The top cover 322 is pre-provided with a metal magnetic conductive material. The top cover 322 is firstly positioned and coupled to the mounting hole 3213 by a positioning shaft so as to be positioned in advance, and then the top cover 322 is magnetically attracted to the magnetic ring 3215 such that the top cover 322 is coupled to the interior of the fitting groove 3214.

In an exemplary embodiment, as shown in Fig. 4, in the embodiment of the present disclosure, the front shell 3211 extends backward along both sides of the front shell and forms a ventilating duct 3210 that facilitates heat dissipation of the fuselage body 10. The ventilating duct 3210 is arranged such that when the unmanned aerial vehicle is working, air passes through the ventilating ducts 3210 on both sides, on the one hand, the heat dissipation of the fuselage body 10 can be enhanced, and on the other hand, the wind resistance of a windward side can also be reduced.

In an exemplary embodiment, as shown in Fig. 3, in the embodiment of the present disclosure, a battery member 7 for supplying power to the fuselage body 10 may be connected to the interior of the mounting frame 14 in a limited manner. The mounting frame 14 includes a fixing bracket 141 coupled to a main body of the fuselage 1 and a mounting bracket 142 coupled to the fixing bracket 141. The fuselage 1 further includes a first mounting through groove 144 disposed in the fixing bracket 141 and used for limiting connection of the liquid storage container 6 and a second mounting through groove 145 disposed in the mounting bracket 142 and used for limiting connection of the battery member 7.

In an exemplary embodiment, a division plate 143 is further provided between the fixing bracket 141 and the mounting bracket 142. The division plate 143 is used to separate the first mounting through groove 144 and the second mounting through groove 145.

In an exemplary embodiment, as shown in Fig. 5, in the embodiment of the present disclosure, the liquid storage container 6 includes a container body with a liquid storage cavity. The container body includes a lower case 62 for limiting connection in the first mounting through groove 144 and an upper case 61 coupled to an upper portion of the lower case 62 and abutting against the fuselage body 10. The upper case 61 and the lower case 62 are perpendicular to each other, and the upper case 61 and the lower case 62 constitute a "T" type or an inverted "L" type structure. Moreover, the upper case 61 and the lower case 62 are communicated, so that the storage amount of liquid in the liquid storage chamber can be ensured.

In an exemplary embodiment, the upper case 61 is further provided with a liquid inlet 616 for adding liquid. The liquid inlet 616 is also in threaded connection with an end cover (not shown). A lower portion of the upper case 61 and a lower portion of the lower case 62 are also provided with a liquid outlet 621 for spraying liquid.

In an exemplary embodiment of the present disclosure, the upper case 61 includes a bottom wall 611, side walls 612 coupled to both sides of the bottom wall 611, a top wall 613 coupled to the top ends of the two side walls 612, and a front end wall 614 and a rear end wall 615 coupled to the front and rear ends of the bottom wall 611. An upper end face of the top wall 613 is the third arc face. The lower case 62 extends downward along the bottom wall 611.

During the actual mounting process, the lower case 62 passes through the first mounting through groove 144, and the upper case 61 abuts against the fuselage body 10, thereby completing the connection of the liquid storage container 6.

In an exemplary embodiment, as shown in Fig. 3, the fuselage body 10 includes a top plate 12 for connecting the mounting shell 31, a bottom plate 13 arranged opposite to the top plate 12, and a transfer bin 11 coupled between the top plate 12 and the bottom plate 13. A control system is coupled to an interior of the transfer bin 11.

In an exemplary embodiment, as shown in Fig. 1 to Fig. 3, the unmanned aerial vehicle includes a plurality of arms 2 provided on the fuselage body 10 and extended outward from the fuselage body 10, a power assembly 5 provided on an extending end of each of the plurality of arms 2 and a landing gear 4 for buffering during landing, and the landing gear 4 is provided on a bottom of the fuselage body 10.

In an exemplary embodiment, an electric adjustment module is further coupled to an interior of the fuselage 1, the arms 2 are distributed around the fuselage body 10, and the arms 2 are fixedly coupled to the fuselage body 10. The landing gear 4 is fixed below the fuselage body 10 to ensure the stability of take-off and landing of the unmanned aerial vehicle. The power assembly 5 is fixed to an end, of the arm 2, away from the fuselage body 10. The power assembly 5 provides lift for the flight of the unmanned aerial vehicle. The liquid storage container 6 is mounted on the fuselage 1 and is used to hold articles to be sprayed or to be transported. The battery member 7 is fixed to the fuselage body 10 for supplying power to the power assembly 5. The control system is fixed to the fuselage 1 and used to control the flight posture of the unmanned aerial vehicle.

The above is only the preferred embodiment of the present disclosure and is not intended to limit the present disclosure. Any modifications, equivalent replacements, improvements and the like made within the spirit and principle of the present disclosure shall fall within the scope of protection of the present disclosure.

## Claims

1. An unmanned aerial vehicle, comprising a fuselage (1), a shell assembly (3) and a functional assembly, wherein the fuselage (1) comprises a fuselage body (10), the shell assembly (3) is coupled to a front end of the fuselage body (10), the functional assembly is mounted at a rear end of the fuselage body (10), an upper end face of the functional assembly is a first circular arc face, an upper end face of the shell assembly (3) is a second circular arc face, the first circular arc face is adjacent to the second circular arc face, and the first circular arc face and the second circular arc face define a streamlined curved face.

2. The unmanned aerial vehicle according to claim 1, wherein the functional assembly comprises a liquid storage container (6), the liquid storage container (6) is mounted at the rear end of the fuselage body (10), a top of the liquid storage container (6) has a third circular arc face, the third circular arc face is adjacent to the second circular arc face, and a part of the first circular arc face is the third circular arc face.

3. The unmanned aerial vehicle according to claim 2, wherein the functional assembly further comprises a battery member (7), the liquid storage container (6) is located between the battery member (7) and the shell assembly (3), a top of the battery member (7) has a fourth circular arc face, the third circular arc face is located between the fourth circular arc face and the second circular arc face, and a part of the first circular arc face is the fourth circular arc face.

4. The unmanned aerial vehicle according to any one of claims 1 to 3, wherein the shell assembly (3) comprises a mounting shell (31) coupled to the front end of the fuselage body (10) in a limited manner and a base shell (32) coupled above the mounting shell (31), and an upper end face of the base shell (32) is the second circular arc face.

5. The unmanned aerial vehicle according to claim 4, wherein the base shell (32) comprises a base shell body (321) coupled to a connecting beam and a top cover (322) coupled to the base shell body (321), the base shell body (321) comprises a front shell (3211) and an upper shell (3212) extending upward and backward along the front shell (3211), the top cover (322) covers the upper shell (3212), and an upper end face of the top cover (322) and an upper end face of the upper shell (3212) form the second circular arc face.

6. The unmanned aerial vehicle according to claim 5, wherein the upper shell (3212) is provided with a mounting hole (3213) for positioning and connecting the top cover (322), a fitting groove (3214) for abutting against an inner wall of the top cover (322) is formed on a circumference of the mounting hole (3213), and the top cover (322) is magnetically attracted and coupled to an interior of the fitting groove (3214).

7. The unmanned aerial vehicle according to claim 5, wherein the front shell (3211) extends backward along both sides of the front shell (3211) and forms a ventilating duct (3210) that facilitates heat dissipation of the fuselage body (10).

8. The unmanned aerial vehicle according to claim 3, wherein the liquid storage container (6) comprises a container body with a liquid storage chamber, the container body comprises a lower case (62) and an upper case (61) coupled to an upper portion of the lower case (62), the upper case (61) is communicated with the lower case (62), a top of the upper case (61) is the third circular arc face, and the battery member (7) is adjacent to an end, away from the shell assembly (3), of the upper case (61).

9. The unmanned aerial vehicle according to claim 8, wherein the fuselage (1) further comprises a mounting frame (14), the mounting frame (14) comprises a fixing bracket (141) coupled to the rear end of the fuselage body (10) and a mounting bracket (142) coupled to the fixing bracket (141), the fuselage (1) further comprises a first mounting through groove (144) disposed in the fixing bracket (141) and used for limiting connection of the lower case (62) and a second mounting through groove (145) disposed in the mounting bracket (142) and used for limiting connection of the battery member (7).

10. The unmanned aerial vehicle according to any one of claims 1 to 3, wherein the unmanned aerial vehicle comprises a plurality of arms (2) provided on the fuselage body (10) and extended outward from the fuselage body (10), a power assembly (5) provided on an extending end of each of the plurality of arms (2) and a landing gear (4) for buffering during landing, and the landing gear (4) is provided on a bottom of the fuselage body (10).
